# FASCICULE DE BREVET EUROPEEN

(11) **EP 0 501 910 B1**
(45) Date de publication et mention de la délivrance du brevet: **22.03.1995**
(21) Numéro de dépôt: 92810053.6
(22) Date de dépôt: 27.01.1992
(51) Int. Cl.: B65G 53/60, A24C 5/39

(54) **Ecluse tangentielle**
Tangentialer Abscheider
Tangential separator

(30) Priorité: 25.02.1991 CH 554/91
(43) Date de publication de la demande: 02.09.1992
(73) Titulaire: FABRIQUES DE TABAC REUNIES S.A., 2003 Neuchâtel-Serrières (CH)
(72) Inventeur: Tallier, Bernard, CH-2023 Gorgier (CH); Hagmann, Otto, CH-2003 Neuchâtel (CH)
(74) Mandataire: Fischer, Franz Josef

(56) Documents cités:
- EP-A- 0 317 504
- BE-A- 520 156
- DE-A- 587 025
- FR-A- 584 332

## Description

La présente invention concerne une écluse tangentielle d'un nouveau type ainsi que le raccordement de ses conduites d'alimentation et d'extraction.

Les machines de fabrication de cigarettes sont généralement alimentées en tabac par une canalisation dont une extrémité se trouve directement au-dessus d'une réserve de tabac en vrac disposée dans un bac de stockage et dont l'autre extrémité aboutit à une partie d'entrée de la machine. Le tabac est transporté par aspiration d'un courant d'air provenant d'une turbine aspirant à travers la partie d'entrée de la machine puis la canalisation mentionnée ci-dessus. La partie d'entrée de la machine comprend généralement une écluse.

L'air ayant servi au transport, doit être éliminé du flot de brins de tabac avant que celui-ci ne passe dans la machine de fabrication de cigarettes. Cette opération, assez délicate afin de ne pas endommager les brins de tabac, est réalisée dans l'écluse mentionnée plus haut. Après passage de l'écluse, le tabac, débarrassé de l'air ayant servi à le transporter, passe dans un distributeur à palettes assurant l'étanchéité atmosphérique entre l'écluse et la suite de la machine. La régulation de la quantité de tabac fournie à la machine à cigarettes est faite par commande d'un clapet disposé dans la tubulure entre la turbine d'aspiration et la sortie d'air de l'écluse, réglant ainsi le débit de l'air servant à transporter le tabac. Une telle écluse est décrite dans le document EP-A-0 317 504 sur lequel se fonde le préambule de la revendication 1.

Si le principe de l'écluse tangentielle est déjà connu, apportant d'excellents résultats en diminuant fortement les risques d'endommagement des brins de tabac, les écluses tangentielles existantes ont néanmoins l'inconvénient d'avoir une aspiration de l'air se faisant selon une direction privilégiée, c'est-à-dire selon la direction d'extraction de l'air hors de l'écluse, ce qui provoque une répartition inégale du tabac à l'intérieur de l'écluse et par conséquent une répartition inégale dans le distributeur qui la suit immédiatement. En effet les brins de tabac auront tendance à s'amonceler vers l'extrémité de l'écluse proche de l'aspiration, laissant l'autre extrémité relativement moins chargée de tabac. Vu que le passage du tabac entre l'écluse et le distributeur se fait par gravitation, la répartition restera donc inégale dans le distributeur. Cette inégalité de distribution provoque une dégradation du tabac ainsi qu'une alimentation irrégulière de la machine à cigarettes.

Un genre d'écluse tangentielle est décrit dans le brevet FR-A-584.332, s'agissant alors d'une chambre de distribution d'un transporteur pneumatique de coton. Dans ce dispositif, le coton n'est pas du tout traité de la même manière que le tabac dans une écluse tangentielle; le coton est aspiré contre la paroi externe d'un tambour en rotation d'où il est ultérieurement retiré par des dispositifs auxiliaires et les poussières sont aspirées et circulent à l'extérieur du cylindre pour être aspirées sur les côtés latéraux du dispositif, alors que dans une écluse tangentielle, le tabac n'entre pas en contact avec le tambour en rotation mais suit une paroi extérieure de forme appropriée, alors que les poussières sont aspirées à l'intérieur du tambour.

L'écluse tangentielle selon l'invention remédie à ces inconvénients en proposant une écluse répondant aux caractéristiques des revendications 1 à 6. De plus, les écluses habituelles ont des canalisations d'entrée et de sortie généralement disposées perpendiculairement entre elles; cette disposition est désavantageuse, dans la mesure où lors de l'ouverture de la machine, il est nécessaire de tout d'abord démonter et/ou déconnecter ces canalisations, celles-ci étant généralement placées tout au haut de la machine, donc difficiles d'accès, puis de les remonter et/ou reconnecter lors de la fermeture de la machine. Par une disposition judicieuse des canalisations d'entrée et de sortie de l'écluse tangentielle selon l'invention, conformément aux caractéristiques des revendications 7 à 9, il est possible de fortement simplifier l'ouverture et la fermeture de la machine en évitant de devoir démonter lesdites canalisations.

L'écluse tangentielle selon l'invention se comprend mieux à partir du dessin annexé avec les figures où:
la figure 1 représente une vue latérale de la partie supérieure de la machine de cigarettes avec l'écluse tangentielle vue en coupe partielle,
la figure 2A représente une vue en coupe selon la ligne II-II de la figure précédente, alors que les figures 2B et 2C représentent deux autres formes d'exécution,
la figure 3 représente une vue partielle par dessus de la machine de cigarettes, et
la figure 4 représente en A la machine de cigarettes en position fermée et en B la même machine en position ouverte.

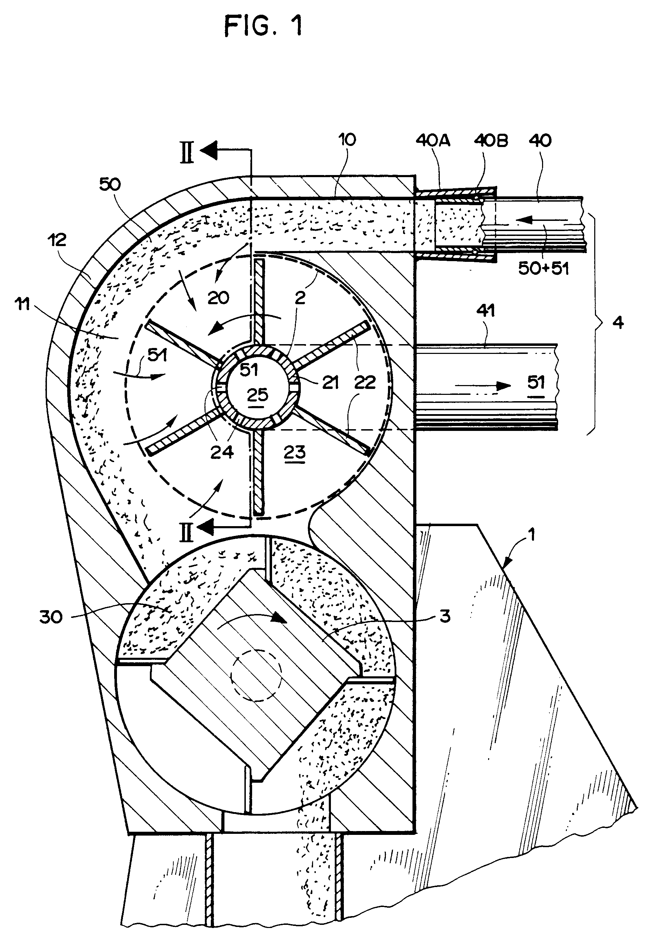

Sur la figure 1, on a représenté uniquement la partie supérieure de la machine de cigarettes 1, comprenant en particulier l'écluse tangentielle selon l'invention comprenant un tambour 2, le distributeur 3 ainsi qu'une partie des canalisations 4 d'amenée de tabac 40 et d'extraction d'air 41. La machine de cigarettes 1 est de fonctionnement connu et ne sera donc pas décrite ici. L'écluse tangentielle comprend tout d'abord le tambour 2 constitué d'un cylindre extérieur 20, creux, de section circulaire et constitué d'un fin treillis métallique; à l'intérieur du cylindre 20, on trouve un cylindre intérieur 21, creux, de section circulaire et qui est coaxial au cylindre extérieur 20. Une pluralité de parois métalliques minces 22, par exemple six, comme représenté sur la figure relie les deux cylindres afin de faire un assemblage rigide du tambour 2. Des chambres d'aspiration 23, six sur la figure, sont donc créées, dont la forme transversale est celle d'un segment de couronne, et qui sont limitées chacune par deux parois minces 22, une portion du cylindre extérieur 20 et une portion du cylindre intérieur 21. Des trous 24, creusés radialement dans les portions du cylindre intérieur 21, assurent une communication entre chacune des chambres d'aspiration 23 et la partie intérieure creuse 25 du cylindre intérieur 21. La disposition des trous 24 sera explicitée ultérieurement. La partie intérieure creuse 25 est reliée, d'une manière qui sera décrite plus bas, à la conduite d'extraction 41, reliée elle-même à une turbine d'aspiration (non représentée). Ainsi, lorsque la turbine est en fonctionnement, la canalisation 40, dont l'extrémité non représentée est proche d'une réserve de tabac en vrac, aspire les brins de tabac 50 et les transporte, mélangés au courant d'air, pour les amener à l'entrée de la machine de cigarettes 1, dans une conduite d'entrée 10. Cette conduite d'entrée 10 débouche dans une chambre semi-circulaire 11 de l'écluse, le tabac 50 étant projeté par son inertie contre la paroi extérieure 12, de forme semi-circulaire, et glissant le long de cette paroi. L'air ayant servi au transport du tabac est aspiré par la turbine mentionnée précédemment et passe donc à travers les mailles du treillis métallique constituant le cylindre extérieur 20. Des poussières de tabac 51, provenant des diverses manipulations que le tabac a subies jusqu'alors, a été lui aussi transporté par la conduite 40 en même temps que les brins de tabac 50; une certaine quantité de ces poussières 51 est aspirée à travers les mailles du treillis. du cylindre extérieur 20 en même temps que l'air de transport. L'air de transport, ainsi qu'une certaine quantité de poussières de tabac 51 sont donc séparés du tabac 50 et passent à travers les chambres d'aspiration 23, puis par les trous 24 vers la partie intérieure creuse 25 du cylindre intérieur 21 d'où ils seront aspirés par la conduite d'extraction 41 vers la turbine d'aspiration. La vitesse d'aspiration de l'air, le volume de la chambre semi-circulaire 11 ainsi que la forme de la paroi extérieure 12 sont déterminés en fonction des caractéristiques physiques du tabac 50, afin que celui-ci soit projeté avec une relative douceur contre la paroi 12 et glisse le long de celle-ci sans s'endommager, puis parvienne dans l'une des chambres 30 du distributeur 3 qui, lorsque ladite chambre sera pleine, pivotera d'une portion de tour dans le sens indiqué, afin de laisser tomber le tabac 50 dans une réserve de travail (non représentée) de la machine de cigarettes 1. Les dimensions et formes de la chambre semi-circulaire 11 sont aussi telles que le tabac 50 reste plaqué contre la paroi extérieure 12 et n'est pas aspiré vers le treillis du cylindre 20, où seul l'air ayant servi au transport ainsi qu'une partie des poussières de tabac 51 sont aspirés. Afin de contribuer à cet effet de séparation du tabac 50 et de l'air, sans créer de tourbillons, le tambour 2 est animé d'un lent mouvement de rotation autour de son axe longitudinal, dans le sens indiqué par la flèche. De cette manière, le flux initial qui comprenait l'air de transport, le tabac 50 ainsi que les poussière 51 est décomposé, le tabac 50 et une partie des poussières 51 passant seuls dans le distributeur 3 assurant l'étanchéité atmosphérique avec la partie inférieure de la machine de cigarettes 1, alors que l'air et le reste des poussières 51 passent par le tambour 2 vers la conduite d'extraction 41 comme expliqué précédemment.

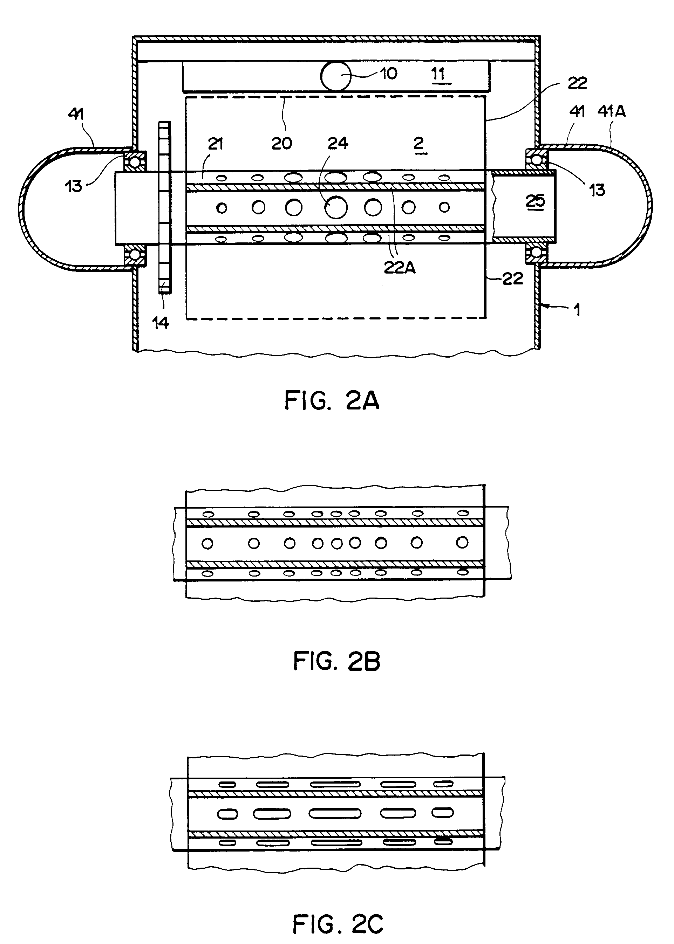

A la figure 2A, on a une coupe faite le long de la ligne II-II de la figure précédente. On y distingue le tambour 2, comprenant le cylindre extérieur 20 en treillis, le cylindre intérieur 21, coaxial au premier, ainsi que les parois de séparation 22 dont deux sont représentées et deux autres représentées par leur amorce 22A sur le cylindre 21. Le conduit d'entrée 10 débouche dans la chambre semi-circulaire 11 dont seule une portion arrière est représentée, le reste de la chambre se trouvant en avant de la figure. Comme indiqué précédemment, le tambour 2 est animé d'un mouvement de rotation autour de son axe longitudinal; pour ceci, le cylindre 21 est prolongé des deux côtés du tambour afin de former un axe de rotation, les extrémités dudit cylindre, respectivement dudit axe, étant chacune fixée à la bague intérieure d'un roulement à billes 13 fixé au bâti de la machine de cigarettes 1. L'entraînement en rotation du tambour 2 est assuré, par exemple, par une roue dentée 14 entraînée par un pignon non représenté. Ainsi, le tambour 2 peut pivoter autour de son axe, étant entraîné en rotation. Les moyens de fixation et d'entraînement du tambour décrits ici ne représentent qu'une forme d'exécution préférentielle, toute autre forme d'exécution convenable étant possible. Chacune des extrémités creuses 25 de l'axe, respectivement du cylindre intérieur 21, débouche dans une conduite d'extraction 41, reliée à la turbine d'aspiration. L'embout de départ 41A de chacune des conduites d'extraction 41 est coudé pour une raison qui sera expliquée ultérieurement.

La paroi de fond de chaque chambre d'aspiration 23, constituée d'une portion du cylindre intérieur 21 est percée de trous 24, la mettant en communication avec l'intérieur creux 25 dudit cylindre. Vu que l'entrée du tabac et des poussières dans la chambre semi-circulaire 11 se fait par la conduite d'entrée 10 qui est disposée en une position centrale par rapport à ladite chambre, alors que l'extraction de l'air et des poussières se fait par aspiration depuis les extrémités du cylindre 21, on aurait, si les trous 24 étaient disposés de manière régulière, une plus forte aspiration aux endroits de la chambre d'aspiration 23 proches des deux extrémités du cylindre intérieur 21, ce qui créerait des amas de tabac sur les bords extrêmes de la chambre semi-circulaire 11 et un déficit de tabac au centre de ladite chambre. Afin d'éviter ceci, la répartition des trous d'aspiration 24 dans le cylindre 21 est irrégulière, la section d'aspiration étant plus forte vers le centre du dispositif et allant en diminuant vers les extrémités. Une forme d'exécution préférentielle consiste à aligner une pluralité de trous 24, sur une génératrice du cylindre intérieur 21, de la portion de fond cylindrique de chaque chambre d'aspiration 23, chacun des trous étant de section circulaire et le diamètre de chaque trou allant en diminuant, depuis le ou les trous disposés en position centrale, vers ceux disposés aux deux extrémités du cylindre 21. Selon une autre forme d'exécution, représentée à la figure 2B, les trous pourraient tous avoir le même diamètre mais l'espacement entre chacun d'eux pourrait aller en augmentant depuis le centre vers les extrémités. Encore une autre manière de résoudre ce problème représentée à la figure 2C, consisterait à disposer des fentes dont la longueur va en diminuant vers les extrémités du cylindre.

Toute autre forme d'exécution des ces trous, permettant une aspiration différenciée, allant en diminuant du centre vers les extrémités d'une génératrice du cylindre intérieur 21, est envisageable.

Ainsi, en créant une variation de la puissance d'aspiration le long de l'axe du tambour 2, il est possible d'obtenir une répartition convenable du tabac 50 dans la chambre semi-circulaire de l'écluse tangentielle; la variation du diamètre, respectivement de la section des trous est déterminée en fonction des caractéristiques physiques des brins de tabac.

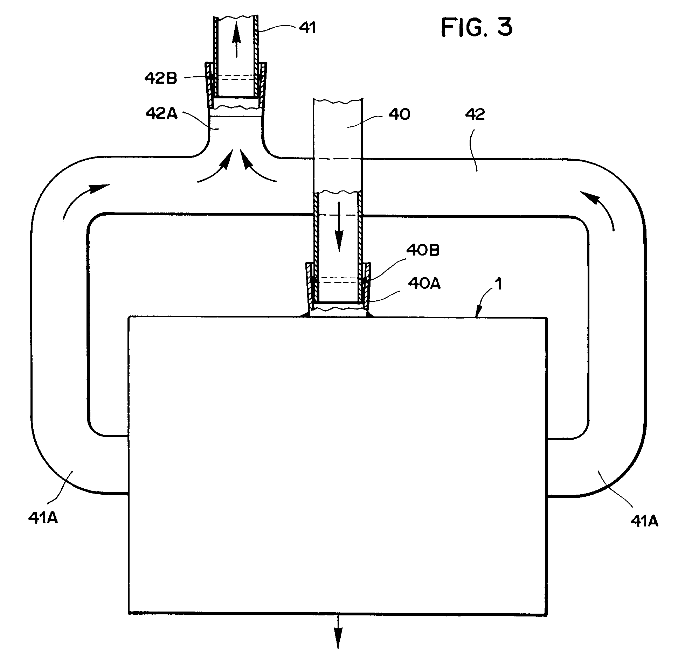

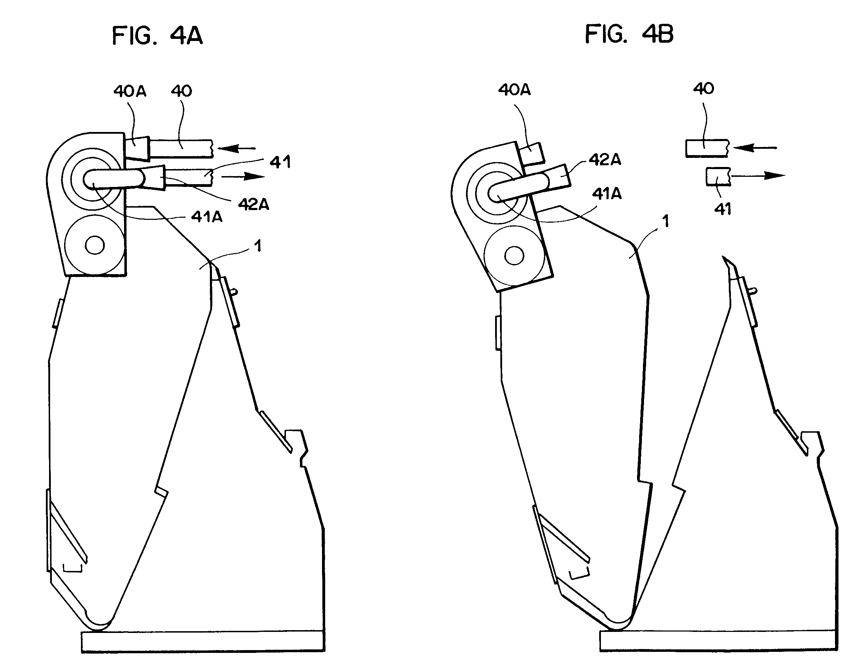

Un autre avantage de l'écluse tangentielle selon l'invention est visible sur les figures 3 et 4. A la figure 3, qui est une vue de dessus de la machine de cigarettes 1, on voit que les embouts 41A des canalisations d'extraction 41 sont coudés à 90°et reliés ensemble par une conduite de liaison 42 qui comprend une embouchure en T 42A. Pour la clarté du dessin, l'embouchure en T 42A a été représentée décalée vers la gauche, mais de manière préférentielle elle se trouve directement sous l'embout 41A, respectivement la conduite 41. De cette manière, les axes de l'orifice de sortie de l'embouchure 42A ainsi que de l'orifice d'entrée 40A sont parallèles entre eux. Lorsqu'on ouvre la machine de cigarettes 1, c'est-à-dire que l'on déplace la partie supérieure de ladite machine dans le sens indiqué par la flèche, chacune des canalisations 40 et 41, qui restent fixes, peut facilement se séparer de son embout 40A, respectivement 41A, fixé sur la machine. Afin de faciliter le déboîtage des conduites et de leurs embouts, ces derniers peuvent être de forme évasée, en cornet de trompette, un joint d'étanchéité circulaire en matériau mou, comme représenté en 40B et 42B, pouvant assurer l'étanchéité entre chaque conduite et son embout. La forme d'exécution représentée, comprenant des embouts de forme évasée munis de joints n'est pas la seule envisageable, toute autre forme d'exécution de la liaison pouvant facilement assurer l'ouverture et la fermeture des conduites, sans qu'il soit nécessaire d'effectuer de fastidieuses opérations de démontage et de remontage, peut être envisagée. Les figures 4A et 4B représentent la machine de cigarettes 1 entière, en position fermée, respectivement en position ouverte, une partie de la machine ayant pivoté autour d'un axe d'ouverture disposé à proximité du socle de ladite machine.

Ainsi, par une conception judicieuse de l'aspiration de l'air à travers l'écluse tangentielle selon l'invention, il est possible d'obtenir une meilleure répartition du tabac à l'intérieur de la chambre semi-circulaire, respectivement dans le distributeur. Les brins de tabac étant moins sollicités, ils sont moins endommagés et l'alimentation en tabac de la machine à cigarettes devenant plus régulière, il est possible, en réglant convenablement le débit de l'air de transport, d'obtenir un fonctionnement continu de l'alimentation ne nécessitant pas d'interrompre périodiquement l'aspiration. Ce dernier facteur aide aussi à diminuer la dégradation des brins de tabac. D'autre part, puisque il est alors possible de disposer parallèlement les différentes conduites d'alimentation et d'extraction de la machine, le démontage, respectivement le remontage desdites conduites n'est plus nécessaire en cas d'ouverture, respectivement de fermeture de la machine.

## Revendications

1. Ecluse tangentielle destinée à séparer des brins de tabac de l'air ayant servi à leur transport jusqu'a ladite écluse, ladite écluse comprenant un tambour rotatif d'aspiration cylindrique (2) de section circulaire constitué d'un treillis (20) et d'un conduit d'extraction d'air (41), caractérisée en ce le tambour d'aspiration (2) est constitué de deux éléments cylindriques coaxiaux de section circulaire (20,21), l'élément cylindrique extérieur (20) étant constitué dudit treillis et étant relié à l'élément cylindrique intérieur (21) par une pluralité de parois pleines (22) disposées radialement et définissant entre elles une pluralité de chambres d'aspiration (23), la paroi de chaque chambre d'aspiration constituée par le segment de cylindre faisant partie de l'élément cylindrique intérieur, comportant une pluralité de trous (24) disposés longitudinalement selon une génératrice dudit segment de cylindre intérieur, deux orifices d'extraction d'air étant prévus aux deux extrémités de l'élément cylindrique intérieur (21), l'air étant extrait selon des sens opposés par chacun desdits orifices.

2. Ecluse tangentielle selon la revendication 1, caractérisée en ce que la disposition, la forme et/ou la section des trous (24) est telle que l'effet d'aspiration desdits trous diminue à partir du centre vers les extrémités de l'élément cylindrique intérieur.

3. Ecluse tangentielle selon la revendication 2, caractérisée en ce que lesdits trous ont une section diminuant à partir du centre vers les extrémités de l'élément cylindrique intérieur.

4. Ecluse tangentielle selon la revendication 3, caractérisée en ce que lesdits trous sont de section circulaire, leur diamètre diminuant à partir du centre vers les extrémités de l'élément cylindrique intérieur.

5. Ecluse tangentielle selon la revendication 2, caractérisée en ce que lesdits trous sont de section circulaire constante, leur espacement augmentant à partir du centre vers les extrémités de l'élément cylindrique intérieur.

6. Ecluse tangentielle selon la revendication 3, caractérisée en ce que lesdits trous sont en forme de fentes allongées, leur longueur diminuant à partir du centre vers les extrémités de l'élément cylindrique intérieur.

7. Ecluse tangentielle selon la revendication 1, caractérisée en ce que chacun desdits orifices d'extraction comprend un renvoi coudé (41A), reliés entre eux par une canalisation de liaison (42) comportant un dispositif (42A) de déconnexion et de connexion automatique à une conduite fixe.

8. Machine à cigarettes munie d'une écluse tangentielle selon la revendication 7, caractérisée en ce que la conduite de transport de tabac par un flot d'air (40) et la conduite d'extraction d'air (41) sont parallèles.

9. Machine à cigarettes selon la revendication 8, caractérisée en ce qu'elle est articulée afin de pouvoir pivoter autour d'un axe perpendiculaire auxdites conduites.

## Claims

1. Tangential sluice intended to separate shreds of tobacco using air for their transport to said sluice, said sluice comprising a cylindrical rotary suction drum (2) of circular cross-section composed of a trellis (20) and an air-exhaust duct (41), characterized in that the suction drum (2) is composed of two cylindrical coaxial elements of circular cross-section (20, 21), the outer cylindrical element (20) comprising said trellis and being connected to the inner cylindrical element (21) by a plurality of solid walls (22) disposed radially and defining between them a plurality of suction chambers (23), the wall of each suction chamber composed of the segment of the cylinder forming part of the inner cylindrical element, having a plurality of holes (24) disposed longitudinally along a generatrice of said segment of the inner cylinder, two air suction orifices being provided at two ends of the inner cylindrical element (21), the air being extracted in opposite directions by each of said orifices.

2. Tangential sluice according to claim 1, characterized in that the disposition, the form and/or the cross-section of holes (24) is such that the suction effect decreases from the center of said inner cylindrical element towards the ends thereof.

3. Tangential sluice according to claim 2, characterized in that said holes have cross-sections decreasing from the center of said inner cylindrical element towards the ends thereof.

4. Tangential sluice according to claim 3, characterized in that said holes have circular cross-sections, the diameters of said holes decreasing from the center of said inner cylindrical element toward the ends thereof.

5. Tangential sluice according to claim 2, characterized in that siad holes have uniform circular cross-sections, the spacing of said holes increasing from the center of said inner cylindrical element toward the ends thereof.

6. Tangential sluice according to claim 3, characterized in that said holes take the form of elongated slots, the length of said slots decreasing from the center of said inner cylindrical element toward the ends thereof.

7. Tangential sluice according to claim 1, characterized in that each of the air-exhaust orifices has a bent connecting piece (41A), joined between them by a connecting duct (42) including means (42A) for automatic disconnection and connection to a fixed duct.

8. Cigarette machine equipped with a tangential sluice according to claim 7, characterized in that the duct (40) for transport of tobacco by air current and the air-exhaust duct (41) are parallel.

9. Cigarette machine according to claim 8, characterized in that it is articulated in order to be able to pivot about a shaft perpendicular to the said ducts.

## Patentansprüche

1. Tangentialer Abscheider zum Trennen von Tabakfasern von Luft, die zum Transport der Fasern bis zum Abscheider gedient hat, wobei der Abscheider eine drehbare zylindrische Saugtrommel (2) mit kreisförmigem Querschnitt umfasst, ein Gitter (20) und eine Leitung (41) zum Absaugen der Luft aufweist, dadurch gekennzeichnet, dass die Saugtrommel aus zwei zylindrischen, koaxialen Elementen (20, 21) von kreisförmigem Querschnitt gebildet ist, dass das äussere zylindrische Element (20) aus dem genannten Gitter gebildet ist und mit dem inneren zylindrischen Element (21) über eine Mehrzahl von vollen Wänden (22) verbunden ist, welche Wände sich radial erstrecken und zwischen sich eine Mehrzahl von Saugkammern (23) bilden, dass die Wand von jeder Saugkammer, die durch ein zylindrisches Segment, das Teil des inneren zylindrischen Elementes ist, gebildet ist, eine Mehrzahl von Löchern (24) umfasst, welche längs einer Mantellinie des genannten Segmentes des inneren Zylinders angeordnet sind und dass zwei Mündungen zum Absaugen von Luft an den zwei Enden des inneren zylindrischen Elementes (21) vorgesehen sind, wobei die Luft durch die beiden Mündungen in entgegengesetzter Richtung abgesogen wird.

2. Tangentialer Abscheider nach Anspruch 1, dadurch gekennzeichnet, dass die Anordnung, die Form und/oder der Querschnitt der Löcher (24) derart ist, dass die Saugwirkung dieser Löcher ausgehend von der Mitte gegen die Enden des inneren zylindrischen Elementes abnimmt.

3. Tangentialer Abscheider nach Anspruch 2, dadurch gekennzeichnet, dass die genannten Löcher ausgehend von der Mitte gegen die Enden des inneren zylindrischen Elementes einen abnehmenden Querschnitt haben.

4. Tangentialer Abscheider nach Anspruch 3, dadurch gekennzeichnet, dass die genannten Löcher von kreisförmigem Querschnitt sind, wobei sich ihr Durchmesser von der Mitte gegen die Enden des inneren zylindrischen Elementes verringert.

5. Tangentialer Abscheider nach Anspruch 2, dadurch gekennzeichnet, dass die genannten Löcher einen kreisförmigen Querschnitt von konstanter Grösse aufweisen, wobei sich der Abstand der Löcher von der Mitte gegen die Enden des inneren zylindrischen Elementes hin vergrössert.

6. Tangentialer Abscheider nach Anspruch 3, dadurch gekennzeichnet, dass die genannten Löcher die Form eines länglichen Schlitzes haben, wobei die Schlitzlänge von der Mitte gegen die Enden des inneren zylindrischen Elementes hin abnimmt.

7. Tangentialer Abscheider nach Anspruch 1, dadurch gekennzeichnet, dass jede Absaugmündung eine gebogene Übergangsleitung (41A) umfasst, welche Übergangsleitungen mit einer Verbindungsleitung (42) miteinander verbunden sind, wobei die Verbindungsleitung eine Vorrichtung (42A) zum automatischen Anschliessen an und Abschalten von einer festen Leitung aufweist.

8. Maschine zum Herstellen von Zigaretten mit einem tangentialen Abscheider nach Anspruch 7, dadurch gekennzeichnet, dass die Leitung (40) zum Transportieren des Tabaks mit einem Luftstrom und die Luftabsaugleitung (41) parallel zueinander sind.

9. Maschine nach Anspruch 8, dadurch gekennzeichnet, dass sie zum Drehen um eine rechtwinklig zu den genannten Leitungen verlaufende Achse gelenkig ausgeführt ist.
